# EUROPEAN PATENT SPECIFICATION

(11) **EP 1 138 185 B1**
(45) Date of publication and mention of the grant of the patent: **07.07.2004**
(21) Application number: 00964290.1
(22) Date of filing: 27.09.2000
(51) Int. Cl.: A01C 3/00, C02F 9/10

(54) **CLOSED AND ENERGETICALLY INTEGRATED PROCESS (CEI PROCESS FOR THE TREATMENT OF ANIMAL WASTES (PURINES)**
GESCHLOSSENER UND ENERGIE INTEGRIERENDER PROZESS ZUR BEHANDLUNG DER ABWÄSSER AUS DER TIERAUFZUCHT
PROCESSUS FERME ET ENERGETIQUEMENT INTEGRE (PROCESSUS CEI) DESTINE AU TRAITEMENT D'EFFLUENTS D'ELEVAGE (PURINS)

(30) Priority: 01.10.1999 ES 9902172
(43) Date of publication of application: 04.10.2001
(73) Proprietor: Universidade De Santiago De Compostela, 15706 Santiago de Compostela (ES)
(72) Inventor: BAO IGLESIAS, Manuel Uni.De Santiago de Compostela, E-15706 Santiago de Compostela (ES)
(74) Representative: Davila Baz, Angel
(86) International application number: PCT/ES2000/000363
(87) International publication number: WO 2001/024604

(56) References cited:
- WO-A1-96/09986
- ES-A1- 2 088 749
- ES-A1- 2 100 123
- DATABASE WPI Week 199016, Derwent Publications Ltd., London, GB; AN 1994-147189, XP002947716 & JP 6 091 283 A (HITACHI KIDEN KOGYO KK) 05 April 1994
- PATENT ABSTRACTS OF JAPAN & JP 57 056 099 A (TOSHIBA CORP.) 03 April 1982

## Description

Closed and Power Integrated Process (CEI Process) for the processing of cattle effluents (manure) by means of which its environmental impact is reduced and a better management of the effluents coming from bovine and porcine cattle industrial facilities is achieved.

From the industrial dimension acquired by the cattle facilities for raising, fattening and exploiting bovine and porcine cattle, aspects of environmental relevance have raised that require solution, specifically, exit products in the liquid and solid effluents. The mentioned effluents are an environmental problem as much by the microbial contamination, their visual and olfactory impact, as well as by the risks that they represent for human and animal health.

Manure is essentially liquid effluents with a variable proportion of solids, with important amounts of nitrogen, phosphorus and potassium salts and volatile compounds, mainly ammoniac (that are those which cause their characteristic disagreeable odour). They also have associated a great amount and variety of microorganisms (depending on their origin) and antibiotics (incorporated in the cattle's feed).

The inadequate use of manure as fertilizer can cause the contamination of water (by eutrophication), biological contamination, and contamination of irrigation water. These two channels of contamination (hydrological and biological) can lead directly to human and other animals with the sanitary risks that are associated (Mara, D., Cairncross, S. Guidelines for safe use of wastewater and excreta in agriculture and aquaculture, World Health Organization, 1989, pag.57-92). Considering the above, a suitable processing of the effluents is necessary in order to solve the problems posed.

In the scientific literature, different procedures for the biological processing of the cattle effluents (manure) are known (Lobera Lössel, J., Integral Treatment of manure, Community of Murcia, 1996, pag.31-54), which allow the processing of small amounts in a not absolutely effective way, since in the final products, liquid and solid, the antibiotics have not been eliminated (which in porcine cattle are directly incorporated into the feed), nor most of pathogenic microorganisms (Turner, C., Burton, C., The inactivation of viruses in pig slurries: A review, Bioresource Technology, vol. 61, 9-20, 1997, pag. 9-20). At the same time, these procedures have a relatively high operation cost and a great surface requirement for the processing and the final application of products (Marañón, and al, Generación de residuos de ganadería vacuna en Asturias, University of Oviedo, 1998, pag.99-112).

In the last years a series of procedures based on the heat treatment of manure, drying of the solid fraction and spill of the liquid fraction after a biological processing in some cases, have been developed (Guascor, Soluciones de desinpacto ambiental del grupo GUASCOR, Medio ambiente, Enero-Febrero, 1999, pag.51-52). These procedures introduce problems such as the visual and olfactory impact in the neighbourhoods of the processing plant (Carballas Fernandez et al., El purin de vacuno en Galicia, Xunta de Galicia, 1990, pag.124-148).

With the intention of solving these problems avoiding the environmental risks we described in the present invention a new process of manure processing.

Manure is sent from the bovine or porcine cattle farm to the processing plant through pipes or by means of tankers. Once in the plant, it is pumped from the reception pit to the grate of rough dressing for the elimination of thickness before pumping manure to the reagent addition unit, in which 100 ppm of iron ions as salts (chlorides, nitrates, sulphates) and nitric acid are added so as to lower pH of manure from an initial value in the surroundings of 6 - 7 to values of pH 4, in order to control the loosening of volatiles and, also, initiating the flocculation, that will facilitate the separation of solid and liquid. After five minutes the necessary calcium carbonate to raise pH of manure up to 8,5 - 9 is added, and it is warmed up to 65 °C in a metallic tank with plastic covering, that allows an approximate residence time of 4 hours. During this time, the pasteurisation is made, with a destruction, between the two stages of heating (pasteurisation and sedimentation), of the microorganisms and antibiotics.To this deposit, air is being introduced to force agitation and drag the volatile substances, that give off in alkaline pH. Manure is transfered to another deposit, called sedimentation unit, in which it remains another 4 hours at a temperature of 85 °C. This cylindrical deposit with conical bottom also acts as a sedimentation unit for the initial separation of solids and liquids. Part of the sedimentation sludge is recirculated to the previous tank with the intention of facilitating the heating of manure and improving the flocculation.

The sludge that leaves through the bottom is taken to a solid-liquid separation unit, in which it is possible to use different equipment (helicoidally screw, blanket filter, centrifuge, vibratory sift). From this separation unit a solid exits, that is taken to a dryer and a liquid that is recirculated to the pasteurisation tank.

The liquid that leaves the sedimentation unit is taken to a centrifugation system, made up of one or two (according to the volume) continuous centrifugal machines, only if foam or floating matter exist , and it is next taken to a concentration system , made up of evaporator units with multiple effects.

The previously described stages are adapted for the case of manure coming from the industry but it is slightly modified for the effluents of bovine industry. In the case of bovine, first the pasteurisation at 85 °C of manure is done, followed by a solid-liquid separation, the solid goes to the dryer and the liquid to a flocculation and sedimentation stage, recirculating the sludge that exits this last stage to the beginning of the flocculation stage.

The separated solid is put under a process of indirect drying consisting in the humidity reduction by effect of heating of the solid without contact with the heating fluid, and therefore eliminating problems of scents dragged by the heating fluid. This fluid could be steam coming from the evaporators or gases coming from a boiler (the one employed to generate steam for the evaporators). The obtained product is perfectly usable in any type of agriculture as organic fertilizer or base substrate or, as organic humus if the concentrated residue from the evaporation unit is added to it, , because the processing under which it has been put eliminates all the present micro organisms in manure.

The liquid separated in the centrifugation step undertakes a concentration process through evaporation, equivalent to multiple effects, with steam thermal recompression, but with the possibility of a mechanical recompression. The steam used comes from a boiler that admits two possibilities, direct gas or fuel combustion, or, use associated to motors of a co-generation installation, which will also generate the necessary energy for the heating tanks used in the previous stages of pasteurisation, sedimentation, and drying.

The steam produced in the evaporation is transferred to a condensation device, so as to cool it and thus use it as irrigation water, since it is free of practically all type of strange substances, such as solid or microorganisms. All the equipment is in closed enclosures and will work in depression (a slight aspiration), with thermal treatment, by means of combustion in motor, boiler or torch, of all gases aspired, at temperatures higher than 1,000 °C. All of the above makes sure that all the currents that leave the installation have received a processing that eliminates their polluting potential.

Energy integration has been made on the treatment process, achieving a power efficiency not present in other treatment processes. As previously stated, the process can be associated to a co-generation plant with the purpose of satisfying the thermal energy requirements in the pasteurisation, drying and evaporation processes. Diagrams 1 and 2 represent the stages of the process for bovine and porcine cattle effluents, respectively.

### ACCOMPLISHMENT OF THE INVENTION

The starting point was a flow of 6,94 kg/s, with a solid content of 6 % and a pH of 6.8. The flow passes through a grate of rough dressing so as to eliminate the thickness before continuing with the processing. Initially we added to the manure 100 ppm of iron ions as a 40 % ferric chloride solution, which involves the addition of 2 mg/s of the mentioned solution.0,11 ml/s of a 40 % solution of NO₃H is added, in order to lower the pH up to 4.

This mixture (reagents and manure) is warmed in a metallic tank with a capacity of 150 m³ which is coated with plastic up to 65 °C to which 28 g/s of CO₃C are added so as to raise pH up to 9. 6,94 kg/s of sludge coming from the sedimentation unit deposit are being recirculated into this tank.

The mixture is transferred from this tank to the sedimentation unit, also with a capacity of 150 m3, in which it is warmed up to 85 °C. In this tank sedimentation of the solid takes place. The Sludge is removed from the lower end, whereas the liquid is retrieved from the upper end.

The liquid from the sedimentation unit goes through a centrifuge to eliminate solids, and the solid through a filtration system, generally a helicoidal screw, which yields a solid with an approximated humidity of 60 %.

This solid is then transferred to an indirect dryer so as to avoid the loosening of scents to the outskirts of the facility due to gases used in the drying obtaining a total of 448 g/s of solids with a humidity of 7 %.

The liquid (5,83 Kg/s) is transferred to the evaporation unit, equivalent to three effects, in which the concentration will take place until the required value is achieved, according to the use planed for the product (direct use of the product or mixture with the solid from the dryer), normally it is concentrated between ten and twenty times.

Being bovine manure we would have made the first pasteurisation at 85 °C, then filtrate, transferring the solid to the dryer and the liquid to a flocculation stage in a tank with a residence time of two hours, adding the same amounts of reagents and transfering it to a sedimentation unit in which it the separation previous to the filtration and centrifugation would take place, recirculating again part of the solid and sending the rest to the dryer, after filtration.

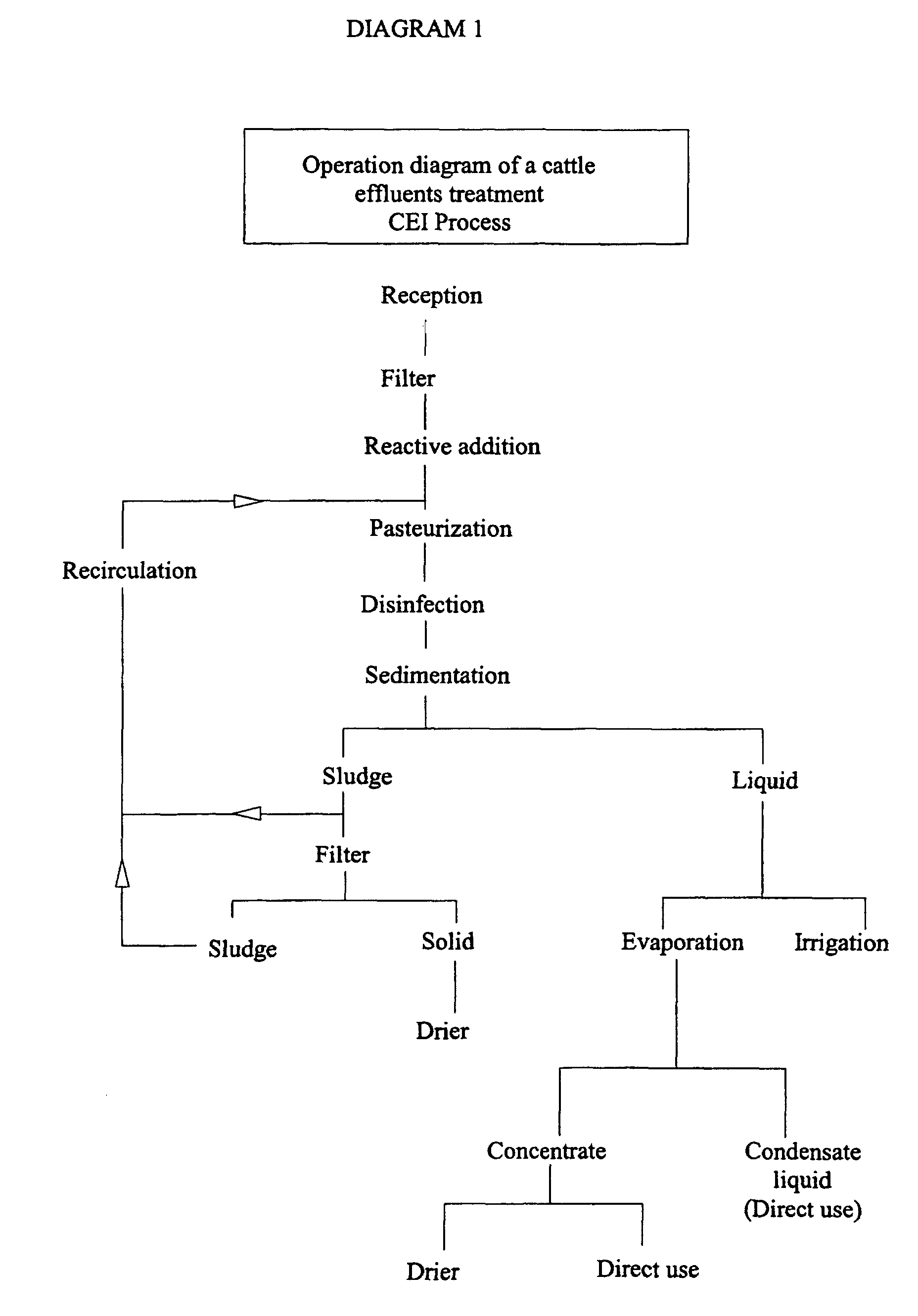

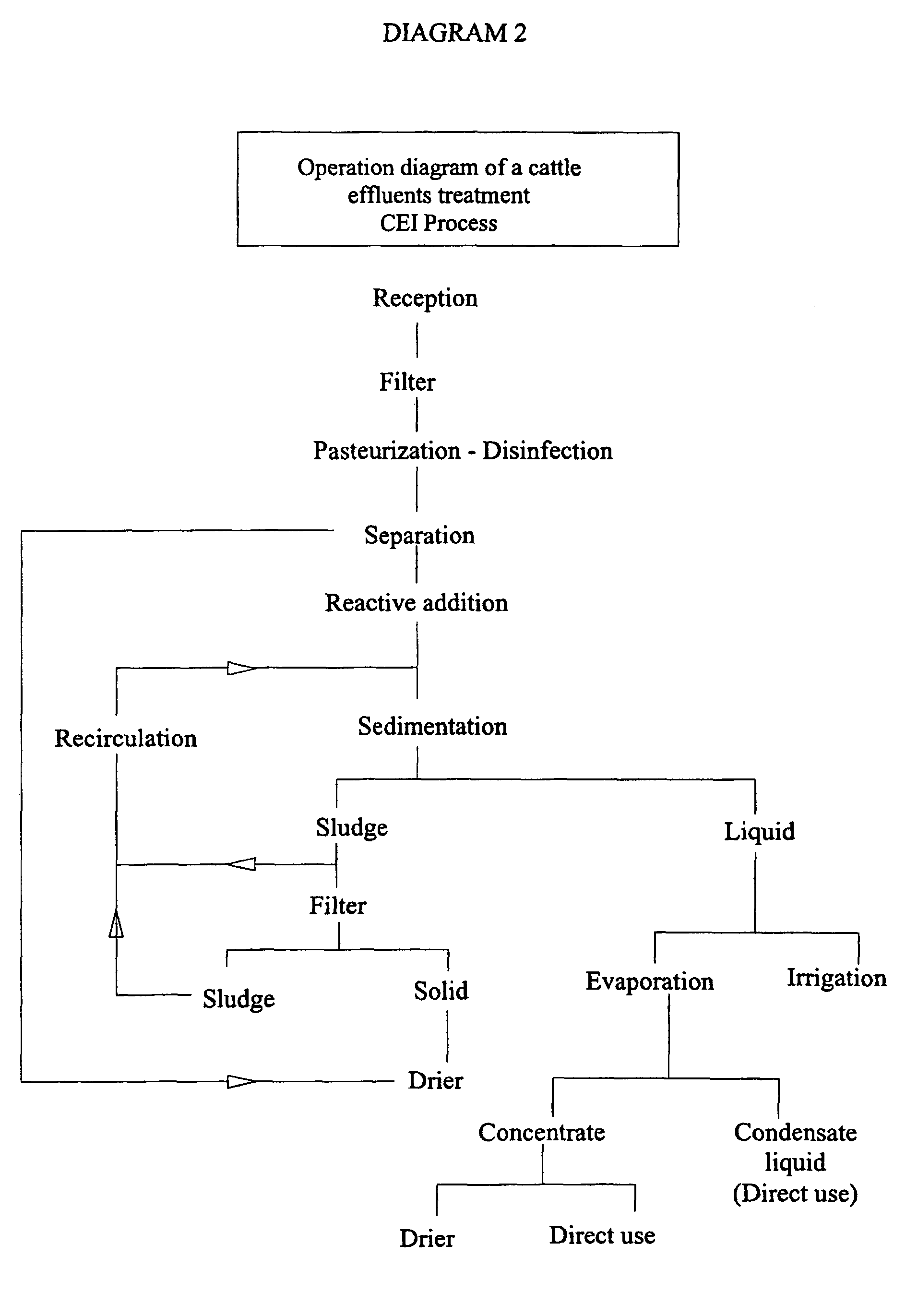

## Claims

1. Closed and powered integrated Process for the processing of manure, e.g. cattle effluents by means of the conventional systems association, that comprises the following steps:
a) roughdressing,
b) a chemical processing,
c) a pasteurisation-desinfection,
d) a flocculation-sedimentation,
e) a filtration and centrifugation,
f) a drying and a concentration by evaporation,
for its application in the cattle industry, bovine and pig.

2. Process, according to claim 1, **characterized in that** the pasteurisation-desinfection consists in the heating during 4 hours at temperature of 65 °C and other 4 hours at 85 °C, producing a inertization of manure and the complete antibiotic and pathogenic micro organisms destruction.

3. Process, according to claim 2, **characterized in that** during the pasteurisation a ventilation is made, consisting in air addition by the inferior part of the tank through a series of orifices, that causes a deodorization and improves the flocculation.

4. Process, according to claim 1, **characterized by** the operation of all the equipment with a small aspiration, operating in depression, catching the gaseous emissions, whose processing is made by means of combustion in motor, boiler or similar.

5. Process, according to claim 1, **characterized by** the employ of efficient thermal energy use, integrating the flows with the purpose of consumptions reducing and, with possibility of satisfying these demands of thermal energy with co-generation plants.

6. Process, according to claim 1, **characterized in that** the drying consists in indirect contact process between the solid to dry and a heating fluid, wherein said heating fluid can be gases coming from a combustion or, steam coming from a boiler or evaporation unit leftover.

## Patentansprüche

1. Geschlossenes und integriert betriebenes Verfahren für die Verarbeitung von Jauche, zum Beispiel Vieh-Ausscheidungen, mit Hilfe der herkömmlichen Systemverbindung, das folgende Schritte umfasst:
a) Rohbehandlung,
b) ein chemisches Verfahren,
c) eine Pasteurisierung-Desinfektion,
d) eine Ausflockung-Sedimentation,
e) eine Filtration und Zentrifugierung,
f) eine Trocknung und Konzentrierung durch Eindampfen,
für seine Verwendung in der Viehwirtschaft, Rind und Schwein.

2. Verfahren nach Anspruch 1, **dadurch gekennzeichnet, dass** die Pasteurisierung-Desinfektion in einem 4-stündigen Erhitzen bei einer Temperatur von 65°C und weiteren 4 Stunden bei 85°C besteht und dabei eine Inertisierung der Jauche und die vollständige Zerstörung der antibiotischen und pathogenen Mikroorganismen erfolgt.

3. Verfahren nach Anspruch 2; **dadurch gekennzeichnet, dass** während der Pasteurisierung eine Belüftung vorgenommen wird, die aus einer Luftzufuhr über den unteren Teil des Tanks durch eine Reihe von Öffnungen besteht, die zu einer Geruchsbeseitigung führt und die Ausflockung verbessert.

4. Verfahren nach Anspruch 1, **gekennzeichnet durch** das Betreiben der ganzen Anlage mit einer schwachen, mit Unterdruck arbeitenden Entlüftung, welche die gasförmigen Emissionen aufnimmt, deren Verarbeitung mittels Verbrennung in einem Motor, Boiler oder ähnlichem erfolgt.

5. Verfahren nach Anspruch 1, **gekennzeichnet durch** die Anwendung eines wirksamen Verbrauchs an thermischer Energie, die die Ströme zum Zwecke der Verbrauchsreduzierung vereinigt mit der Möglichkeit diesen Bedarf an thermischer Energie **durch** kombinierte Kraft- und Heizwerke zu decken.

6. Verfahren nach Anspruch 1, **dadurch gekennzeichnet, dass** die Trocknung aus einem indirekten Kontaktverfahren zwischen dem zu trocknenden Feststoff und einem Heizfluid besteht, wobei das Heizfluid Gase sein können, die aus einer Verbrennung stammen oder Dampf, der aus einem Boiler kommt, oder ein aus einer Verdampferanlage kommende Restdampf.

## Revendications

1. Procédé intégré motorisé et en circuit fermé pour le traitement du fumier, par exemple des effluents du bétail au moyen de l'association de systèmes conventionnels, qui comprend les étapes suivantes :
a) un traitement de dégrossissage,
b) un traitement chimique,
c) une pasteurisation-désinfection,
d) une floculation-sédimentation,
e) une filtration et une centrifugation,
f) un séchage et une concentration par évaporation, pour son application dans l'industrie du bétail, des bovins et des porcins.

2. Procédé selon la revendication 1 **caractérisé en ce que** la pasteurisation-désinfection consiste à chauffer pendant quatre heures à la température de 65°C et pendant quatre heures supplémentaires à 85°C, à produire une inertisation du fumier et la destruction complète des micro-organismes pathogènes et antibiotiques.

3. Procédé selon la revendication 2 **caractérisé en ce que** pendant la pasteurisation une ventilation est effectuée, consistant à ajouter de l'air par la partie inférieure du réservoir au travers d'une série d'orifices, qui provoque une désodorisation et améliore la floculation.

4. Procédé selon la revendication 1 **caractérisé par** le fonctionnement de tous les équipements avec une petite aspiration ; travaillant en dépression, récupérant les émissions gazeuses, dont le traitement est effectué au moyen d'une combustion dans un moteur, une chaudière ou similaire.

5. Procédé selon la revendication 1 **caractérisé par** l'emploi d'une utilisation efficace de l'énergie thermique, de l'intégration des flux avec l'objectif de réduire les consommations et, avec la possibilité de satisfaire ces demandes en énergie thermique avec des usines de cogénération.

6. Procédé selon la revendication 1 **caractérisé en ce que** le séchage consiste en un procédé de contact indirect entre le solide à sécher et un fluide de chauffage, le fluide de chauffage pouvant être des gaz provenant d'une combustion ou de la vapeur provenant d'une chaudière ou des restes d'une unité d'évaporation.
